# EUROPEAN PATENT SPECIFICATION

(11) **EP 3 544 271 B1**
(45) Date of publication and mention of the grant of the patent: **30.12.2020**
(21) Application number: 17872761.6
(22) Date of filing: 09.10.2017
(51) Int. Cl.: H04M 1/02, H04N 9/04, H04N 5/225, H04N 5/235, G03B 15/05

(54) **MOBILE TERMINAL-BASED FLASH ASSEMBLY AND CONTROL SYSTEM AND CONTROL METHOD THEREOF**
AUF MOBILEM ENDGERÄT BASIERENDE BLITZANORDNUNG UND STEUERUNGSSYSTEM SOWIE ZUGEHÖRIGES STEUERUNGSVERFAHREN
ENSEMBLE FLASH À BASE DE TERMINAL MOBILE ET SYSTÈME DE COMMANDE ET SON PROCÉDÉ DE COMMANDE

(30) Priority: 17.11.2016 CN 201611012252
(43) Date of publication of application: 25.09.2019
(73) Proprietor: JRD Communication (Shenzhen) Ltd, Shenzhen, Guangdong 518052 (CN)
(72) Inventor: JIAO, Tao, Shenzhen Guangdong 518052 (CN)
(74) Representative: de Arpe Fernandez, Manuel
(86) International application number: PCT/CN2017/105412
(87) International publication number: WO 2018/090758

(56) References cited:
- WO-A1-2012/072855
- WO-A1-2015/128897
- CN-A- 103 167 133
- CN-A- 103 369 083
- CN-A- 104 834 152
- CN-A- 106 027 916
- CN-A- 106 331 382
- US-A1- 2010 074 610
- US-A1- 2012 312 976
- US-A1- 2015 002 735
- US-A1- 2016 088 228
- US-A1- 2016 109 232

## Description

### TECHNICAL FIELD

The present disclosure relates to image processing technology, in particular to a flash control system and a control method thereof.

### BACKGROUND

Current mainstream smartphones are equipped with a flash to improve the dark-shooting effect. Although the LED light source is a cold light source, it has a luminous efficiency of approximately 100lm/W, and an electro-optic conversion efficiency of about 20%-30%. In other words, about 70% of the electrical energy becomes heat. As mobile phones are getting more and more compact, the CPU, the screen, the battery and the like have become the main sources of heat, while the design of mobile phones has never considered enhancing the heat dissipation of the LED flash which serves as an auxiliary light source for photographing. Consequently, excessive use will result in poor heat dissipation, high heating temperature, and thus reduction of the life of the LED flash.

D1 (US 2015/002735A1) shows an electronic device configured to use the device's own display to provide an illumination source for front-facing image sensors. The electronic device may be a digital device with a front-facing image sensor and a display device. When the user activates the shutter button to capture the image at a particular point, the digital device would instruct the display device to flash a bright white color that would better illuminate the user, thus this would improve the image being captured by adding additional light onto the user. Furthermore, the digital device further comprises an illumination sensing module configured to determine an illumination condition, an illumination adjustment module configured to adjust the illumination conditions of the display device to and from an image illumination condition and a normal viewing illumination condition, and a front-facing image sensor module configured to capture the digital image through the front-facing image sensor under the image illumination condition.

However, D1 fails to teach or suggest the digital device may acquire the ambient light color temperature and the ambient light brightness of the current scene, and then calculate a focus point, a target value for color temperature adjustment and a target value for brightness adjustment by using 3A algorithm. Specifically, D1 fails to teach or suggest the 3A algorithm comprises the automatic white balance algorithm for the color temperature adjustment.

D2 (US 2010/0074610) shows a flash thermal feedback for camera auto-exposure, which comprises: determining an intensity of a second flash based on a predicted thermal condition (e.g., temperature due to the second flash) that is influenced by a first flash that is previous to the second flash (where the first flash may be a pre-flash or a flash from a previous photo); adjusting a quality function of an image capture device according to the intensity of the second flash predicated on the thermal condition of the first flash; and illuminating a scene by the second flash at the determined flash intensity and capturing and storing an image of the illuminated scene using the adjusted quality function.

However, D2 only uses the thermal condition of the first flash to determine the intensity of the second flash and adjust the quality function, however, the predicted thermal condition of the first flash cannot accurately mirror the ambient temperature since it is still influenced by the heat generated by the first flash, thus the intensity of the second flash is determined by the predicted thermal condition of the first flash. That is, the intensity of the second flash is predicted and inaccurate.

### SUMMARY

In order to overcome the deficiencies of the related art, the present disclosure provides a flash assembly of a mobile terminal, a control system thereof and a control method thereof, wherein a display assembly is used as the flash assembly which meanwhile serves as a protective cover of a camera assembly, thereby reducing the thermal output of the mobile terminal, the number of components and the cost of production.

The present disclosure provides a control system for a flash assembly of a mobile terminal as currently claimed, the control system comprising:
a flash assembly disposed on the mobile terminal, the flash assembly being a display assembly disposed at a front end of a camera assembly of the mobile terminal;
a scene predictor configured to acquire an ambient light color temperature and an ambient light brightness of a current scene through the camera assembly, calculate a focus point, a target value for color temperature adjustment and a target value for brightness adjustment using 3A algorithm, and transmit the focus point, the target value for color temperature adjustment and the target value for brightness adjustment to a controller;
the controller configured to calculate correspondingly a shutter speed, a sensitivity of a sensor of the camera assembly, and a current ratio outputted by the flash assembly according to the target value for color temperature adjustment and the target value for brightness adjustment; the flash assembly outputting a corresponding display brightness and a corresponding display color temperature according to the current ratio.

Further, the control system also comprising a manual regulator configured to adjust parameters of brightness, color temperature, and flash frequency of the flash assembly manually and transmit the parameters to the flash controller, the controller outputting a corresponding current ratio according to the parameters, wherein the manual regulator is further configured to adjust the color of the flash assembly;
the 3A algorithm comprises an automatic white balance algorithm, and the automatic white balance algorithm comprises:
obtaining a pre-flash image by pre-flashing the flash assembly after obtaining an original image of the current scene through the camera assembly;
analyzing the original image, and performing statistical operations on R/G and B/G information in the original image to obtain color temperature information of the original image;
analyzing the pre-flash image, and performing statistical operations on R/G and B/G information in the pre-flash image to obtain color temperature information of the pre-flash image; and
adding the color temperature information of the original image to the color temperature information of the pre-flash image to finally obtain the target value for color temperature adjustment.

Further, the 3A algorithm further includes an automatic focus algorithm and an automatic exposure algorithm.

The present disclosure also provides a control method of a flash assembly, comprising:
a scene predictor prejudging an ambient light color temperature and an ambient light brightness of a current scene to obtain data of the same, calculating a focus point, a target value for color temperature adjustment and a target value for brightness adjustment using 3A algorithm, and transmitting the focus point, the target value for color temperature adjustment and the target value for brightness adjustment to a controller;
the controller calculating correspondingly a shutter speed, a sensitivity of a sensor of the camera assembly, and a current ratio outputted by the flash assembly according to the target value for color temperature adjustment and the target value for brightness adjustment; and
the flash assembly outputting correspondingly a display color temperature and a display brightness;
wherein the 3A algorithm comprises an automatic white balance algorithm, and the automatic white balance algorithm comprises:
   obtaining a pre-flash image by pre-flashing the flash assembly after obtaining an original image of the current scene through the camera assembly (2);
   analyzing the original image, and performing statistical operations on R/G and B/G information in the original image to obtain color temperature information of the original image;
   analyzing the pre-flash image, and performing statistical operations on R/G and B/G information in the pre-flash image to obtain color temperature information of the pre-flash image; and
   adding the color temperature information of the original image to the color temperature information of the pre-flash image to finally obtain the target value for color temperature adjustment.

Further, the 3A algorithm further includes an automatic focus algorithm, and an automatic exposure algorithm.

Further, the automatic focus algorithm searches for a maximum focus value in the current scene by adjusting a position of a lens of the camera assembly, and a lens motor drives the lens to a position corresponding to the maximum focus value, thereby completing focusing and determining the focus point.

Further, the automatic exposure algorithm includes:
obtaining a pre-flash image by pre-flashing the flash assembly after obtaining an original image of the current scene through the camera assembly;
analyzing the original image to obtain a brightness value of the original image, and comparing the brightness value of the original image with a target brightness value to obtain an exposure setting value of the original image;
analyzing the pre-flash image to obtain a brightness value of the pre-flash image, and comparing the brightness value of the pre-flash image with the target brightness value to obtain an exposure setting value of the pre-flash image; and
averaging the exposure setting value of the original image and the exposure setting value of the pre-flash image to finally obtain the target value for brightness adjustment;
wherein the scene predictor decreasing the brightness value of the original image or the pre-flash image by the exposure setting value thereof when the brightness value of the original image or the pre-flash image is greater than the target brightness value to define an overexposure; and the scene predictor increasing the brightness value of the original image or the pre-flash image by the exposure setting value thereof when the brightness value of the original image or the pre-flash image is smaller than the target brightness value to define an underexposure.

Further, the flash assembly is an OLED display assembly.

Compared with the related art, the present disclosure reduces the number of components by replacing the protective cover of the camera with the display assembly, and using the display assembly as a flash assembly can reduces the thermal output.

### BRIEF DESCRIPTION OF THE DRAWINGS

FIG. 1 is a schematic view showing a arrangement position of a display assembly and a camera assembly of the present disclosure.
FIG. 2 is a block diagram of the control system of the present disclosure.
FIG. 3 is a flow diagram of the control system of the present disclosure.
FIG. 4 is a flow diagram of an automatic exposure algorithm of the present disclosure.
FIG. 5 is a flow diagram of an automatic white balance algorithm of the present disclosure.
FIG. 6 is a schematic structural view of an OLED display assembly of the present disclosure.
FIG. 7 is a schematic structural view showing a specific arrangement position of the display assembly of the present disclosure.

### DETAILED DESCRIPTION

The present disclosure will be further described in detail below with reference to the accompanying drawings and embodiments.

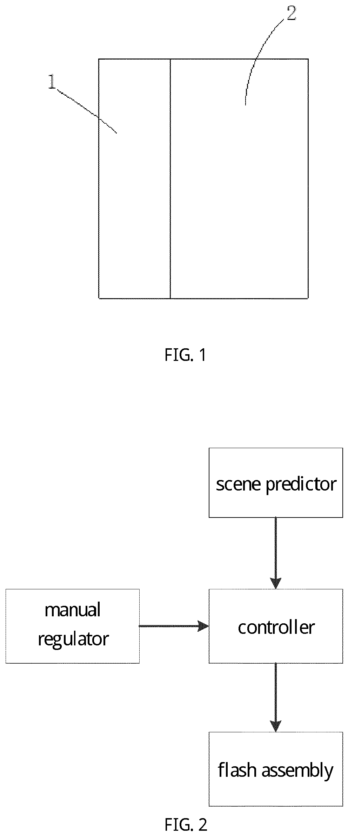

As shown in FIG. 1, a flash assembly of a mobile terminal according to the present disclosure may be disposed on the mobile terminal. The flash assembly may be a display assembly 1 disposed at a front end of a camera assembly 2 of the mobile terminal and replacing a protective cover of the existing camera assembly 2. The display assembly 1 may be connected to a processor of the mobile terminal via an I2C. By replacing the protective cover with the display assembly 1, the present disclosure reduces the number of components and the cost.

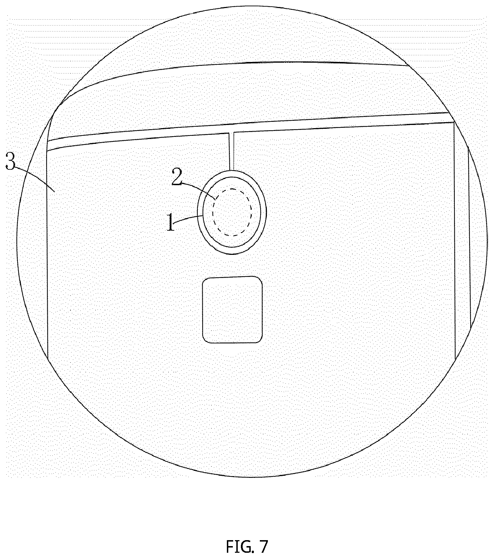

FIG. 7 shows a specific arrangement position of the display assembly, the display assembly 1 may be disposed on a rear housing 3 of the mobile terminal and at a front end of the camera assembly 2 (the dotted portion in the drawing).

In the embodiments of the present disclosure, the display assembly 1 may be a liquid crystal display assembly, and the liquid crystal display assembly may be an OLED (Organic Light-Emitting Diode) display assembly.

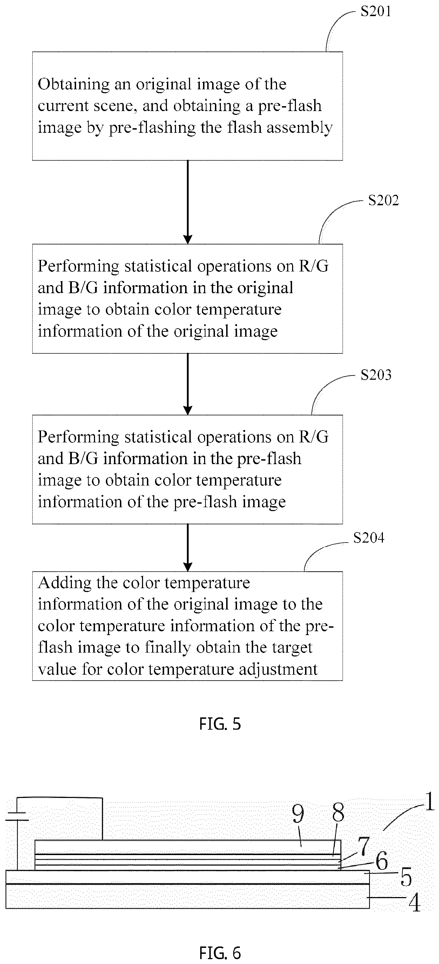

As shown in FIG. 6, the OLED display assembly of the present disclosure may include a substrate 4 on which an anode 5, a hole transport layer 6, an organic light-emitting layer 7, an electron transport layer 8, and a cathode 9 may be sequentially provided.

As shown in FIG. 2, a control system of a mobile terminal may include a flash assembly and the flash assembly may be a display assembly disposed at a front end of a camera assembly. The control system may further include:
a scene predictor configured to acquire an ambient light color temperature and an ambient light brightness of a current scene through the camera assembly, calculate a focus point, a target value for color temperature adjustment and a target value for brightness adjustment using 3A algorithm, and transmit the focus point, the target value for color temperature adjustment and the target value for brightness adjustment to a controller; and
the controller configured to calculate correspondingly a shutter speed, a sensitivity of an image sensor of the camera assembly, and a current ratio outputted by the flash assembly according to the target value for color temperature adjustment and the target value for brightness adjustment, and to control the display brightness and the display color temperature of the flash assembly via the current ratio outputted by the flash assembly; the flash assembly configured to output a corresponding display brightness and a corresponding display color temperature, which flash assembly is preferably an OLED display assembly.

The calculation of the shutter speed and the calculation of the sensitivity may be both implemented using the related art, and no specific limitations are set herein.

The control system of the present disclosure may further include a manual regulator for manually adjusting parameters of the display brightness, the display color temperature, and the flash frequency of the flash assembly and transmitting the parameters to the flash controller, and the controller may output a corresponding current ratio according to the parameters, such that the photo has better performance in the Automatic Exposure (AE) and the Automatic White Balance (AWB).

The manual regulator may also be used to adjust the display color outputted by the flash assembly, and the controller may adjust a corresponding current ratio according to the desired color, so that the flash assembly displays the corresponding display color, and may function as a flashlight for illumination.

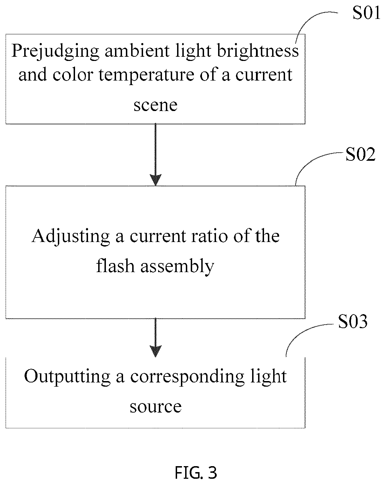

Referring to FIG. 3, a control method of a flash assembly may include the following blocks:

Block S01: a scene predictor prejudging an ambient light color temperature and an ambient light brightness of a current scene to obtain data of the same, calculating a focus point, a target value for color temperature adjustment and a target value for brightness adjustment using 3A algorithm, and transmitting the focus point, the target value for color temperature adjustment and the target value for brightness adjustment to a controller.

Block S02: the controller calculating correspondingly a shutter speed, a sensitivity of a sensor of the camera assembly, and a current ratio outputted by the flash assembly according to the target value for color temperature adjustment and the target value for brightness adjustment.

Block S03: the flash assembly outputting correspondingly a display color temperature and a display brightness.

The 3A algorithm may include an automatic focus algorithm (AF), an automatic exposure algorithm (AE), and an automatic white balance algorithm (AWB).

The automatic focus algorithm (AF) may search for a maximum focus value (FV) in the current scene by adjusting a position of a lens of the camera assembly, and a lens motor drives the lens to a position corresponding to the maximum focus value, thereby completing focusing and determining the focus point.

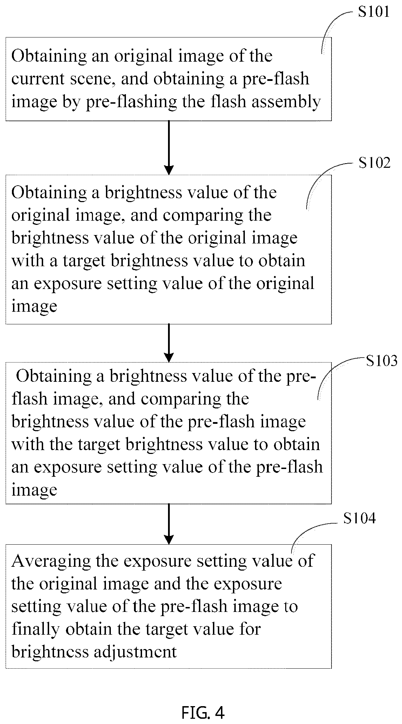

As shown in FIG. 4, the automatic exposure algorithm may include the following blocks:
Block S101: obtaining a pre-flash image by pre-flashing the flash assembly after obtaining an original image of the current scene through the camera assembly.
Block S102: analyzing the original image to obtain a brightness value (Y) of the original image, and comparing the brightness value (Y) of the original image with a target brightness value (AE target) to obtain an exposure setting value of the original image.
Block S103: analyzing the pre-flash image to obtain a brightness value (Y) of the pre-flash image, and comparing the brightness value (Y) of the pre-flash image with the target brightness value (AE target) to obtain an exposure setting value of the pre-flash image.
Block S104: averaging the exposure setting value of the original image and the exposure setting value of the pre-flash image to finally obtain the target value for brightness adjustment.

The target brightness value (AE target) is typically 47.

Where the brightness value (Y) of the original image or the pre-flash image is greater than the target brightness value to define an overexposure, the scene predictor decreases the brightness value of the original image or the pre-flash image by the exposure setting value thereof.

Where the brightness value (Y) of the original image or the pre-flash image is smaller than the target brightness value to define an underexposure, the scene predictor increases the brightness value of the original image or the pre-flash image by the exposure setting value thereof.

For example, when the original image or the pre-flash image has a brightness value of 30, which is smaller than the target brightness value, the brightness value of the original image or the pre-flash image should be increased by the exposure setting value thereof that is obtained by subtracting the brightness value thereof from 47, namely, the exposure setting value of the original image or the pre-flash image is 17 (47-30=17) in this case; and if the original image or the pre-flash image has a brightness value of 90, the exposure setting value of the original image or pre-flash image is -43 (47-90=-43) in this case.

As shown in FIG. 5, the automatic white balance algorithm (AWB) may include the following blocks:
Block S201: obtaining a pre-flash image by pre-flashing the flash assembly after obtaining an original image of the current scene through the camera assembly.
Block S202: analyzing the original image, and performing statistical operations on R/G and B/G information in the original image to obtain color temperature information of the original image.
Block S203: analyzing the pre-flash image, and performing statistical operations on R/G and B/G information in the pre-flash image to obtain color temperature information of the pre-flash image.
Block S204: adding the color temperature information of the original image to the color temperature information of the pre-flash image to finally obtain the target value for color temperature adjustment.

The statistical operations on the R/G and B/G information in the original image or the pre-flash image specifically include converting the ambient light into an electrical signal via the sensor of the camera assembly, and performing a statistical operation on a value of the electrical signal of each pixel of the Bayer array in the sensor, thereby obtaining the color temperature information of the original image or the pre-flash image; statistical operations on the R/G and B/G information in the original image or the pre-flash image pertain may be the related art, and details thereon is not necessary herein.

As regards the mainstream display technology for current mobile terminals, the OLED display assembly is superior to the LED flash in terms of luminous efficiency, color and color temperature, and the thermal output of the OLED display assembly is much lower than that of the LED flash, which can reduce the thermal output of the flash. By incorporating and replacing the conventional LED flash and the protective cover of the camera assembly, the present disclosure expands the applications of the display assembly and is able to greatly reduce the cost of production.

While the present disclosure has been illustrated and described with respect to the specific embodiments, those skilled in the art could appreciate that various changes can be made to the forms and details without departing from the scope of the present disclosure defined by the appending claims.

## Claims

1. A control system for a flash assembly of a mobile terminal, comprising:
a flash assembly disposed on the mobile terminal, the flash assembly being a display assembly (1) disposed at a front end of a camera assembly (2) of the mobile terminal;
a scene predictor configured to acquire an ambient light color temperature and an ambient light brightness of a current scene through the camera assembly (2), calculate a focus point, a target value for color temperature adjustment and a target value for brightness adjustment using 3A algorithm, and transmit the focus point, the target value for color temperature adjustment and the target value for brightness adjustment to a controller;
the controller configured to calculate correspondingly a shutter speed, a sensitivity of a sensor of the camera assembly (2), and a current ratio outputted by the flash assembly according to the target value for color temperature adjustment and the target value for brightness adjustment; the flash assembly outputting a corresponding display brightness and a corresponding display color temperature according to the current ratio; and
a manual regulator configured to adjust parameters of brightness, color temperature, and flash frequency of the flash assembly manually and transmit the parameters to the controller, the controller outputting a corresponding current ratio according to the parameters;
it is **characterized in that**, the manual regulator is further configured to adjust the color of the flash assembly;
the 3A algorithm comprises an automatic focus algorithm, an automatic exposure algorithm and an automatic white balance algorithm, and the automatic white balance algorithm comprises:
obtaining a pre-flash image by pre-flashing the flash assembly after obtaining an original image of the current scene through the camera assembly (2);
analyzing the original image, and performing statistical operations on R/G and B/G information in the original image to obtain color temperature information of the original image;
analyzing the pre-flash image, and performing statistical operations on R/G and B/G information in the pre-flash image to obtain color temperature information of the pre-flash image; and
adding the color temperature information of the original image to the color temperature information of the pre-flash image to finally obtain the target value for color temperature adjustment.

2. The control system for a flash assembly of a mobile terminal according to claim 1, wherein the 3A algorithm further comprises an automatic focus algorithm, and an automatic exposure algorithm.

3. A control method of a flash assembly, comprising:
a scene predictor prejudging an ambient light color temperature and an ambient light brightness of a current scene to obtain data of the same, calculating a focus point, a target value for color temperature adjustment and a target value for brightness adjustment using 3A algorithm, and transmitting the focus point, the target value for color temperature adjustment and the target value for brightness adjustment to a controller;
the controller calculating correspondingly a shutter speed, a sensitivity of a sensor of the camera assembly (2), and a current ratio outputted by the flash assembly according to the target value for color temperature adjustment and the target value for brightness adjustment; and
the flash assembly outputting correspondingly a display color temperature and a display brightness;
it is **characterized in that**, the 3A algorithm comprises an automatic focus algorithm, an automatic exposure algorithm and an automatic white balance algorithm, and the automatic white balance algorithm comprises:
obtaining a pre-flash image by pre-flashing the flash assembly after obtaining an original image of the current scene through the camera assembly (2);
analyzing the original image, and performing statistical operations on R/G and B/G information in the original image to obtain color temperature information of the original image;
analyzing the pre-flash image, and performing statistical operations on R/G and B/G information in the pre-flash image to obtain color temperature information of the pre-flash image; and
adding the color temperature information of the original image to the color temperature information of the pre-flash image to finally obtain the target value for color temperature adjustment.

4. The control method of a flash assembly according to claim 3, wherein the 3A algorithm further comprises an automatic focus algorithm, and an automatic exposure algorithm.

5. The control method of a flash assembly according to claim 4, wherein the automatic focus algorithm searches for a maximum focus value in the current scene by adjusting a position of a lens of the camera assembly (2), and a lens motor drives the lens to a position corresponding to the maximum focus value, thereby completing focusing and determining the focus point.

6. The control method of a flash assembly according to claim 4, wherein the automatic exposure algorithm comprises:
obtaining a pre-flash image by pre-flashing the flash assembly after obtaining an original image of the current scene through the camera assembly (2);
analyzing the original image to obtain a brightness value of the original image, and comparing the brightness value of the original image with a target brightness value to obtain an exposure setting value of the original image;
analyzing the pre-flash image to obtain a brightness value of the pre-flash image, and comparing the brightness value of the pre-flash image with the target brightness value to obtain an exposure setting value of the pre-flash image; and
averaging the exposure setting value of the original image and the exposure setting value of the pre-flash image to finally obtain the target value for brightness adjustment;
wherein the scene predictor decreasing the brightness value of the original image or the pre-flash image by the exposure setting value thereof when the brightness value of the original image or the pre-flash image is greater than the target brightness value to define an overexposure; and the scene predictor increasing the brightness value of the original image or the pre-flash image by the exposure setting value thereof when the brightness value of the original image or the pre-flash image is smaller than the target brightness value to define an underexposure.

7. The control method of a flash assembly according to claim 3, wherein the flash assembly is an OLED display assembly.

8. The control method of a flash assembly according to claim 6, wherein the target brightness value is 47.

9. The control method of a flash assembly according to claim 3, wherein the statistical operations on the R/G and B/G information in the original image or the pre-flash image comprises:
converting the ambient light into an electrical signal via the sensor of the camera assembly (2); and
performing a statistical operation on a value of the electrical signal of each pixel of the Bayer array in the sensor.

10. The control method of a flash assembly according to claim 7, wherein the OLED display assembly comprises a substrate (4), an anode (5), a hole transport layer (6), an organic light-emitting layer (7), an electron transport layer (8) and a cathode (9); the anode (5), the hole transport layer (6), the organic light-emitting layer (7), the electron transport layer (8) and the cathode (9) are sequentially provided on the substrate (4).

## Patentansprüche

1. Ein Steuerungssystem für ein Blitzgerät eines Handyterminals, das Folgendes umfasst:
Ein Blitzgerät, das auf dem Handyterminal angeordnet wird, wobei das Blitzgerät ein Anzeigegerät (1) ist, das am vorderen Ende des Kamerasystems (2) des Handyterminals angeordnet ist;
einen Szenen-Prädiktor, der konfiguriert ist, um eine Umgebungslichtfarbentemperatur und eine Umgebungslichthelligkeit einer aktuellen Szene durch das Kamerasystem (2) zu erfassen, einen Fokuspunkt, einen Zielwert für die Einstellung der Farbtemperatur und einen Zielwert für die Einstellung der Helligkeit mit Hilfe eines 3A Algorithmuses zu berechnen, und den Fokuspunkt, den Zielwert für die Einstellung der Farbtemperatur und den Zielwert für die Einstellung der Helligkeit an das Steuergerät weiterzuleiten;
das Steuergerät, das konfiguriert ist, um entsprechend eine Verschlusszeit, eine Empfindlichkeit eines Sensors des Kamerasystems (2), und ein aktuelles, des vom Blitzgerät ausgegebenenes Verhältnis zu berechnen übereinstimmend mit dem Zielwert für die Einstellung der Farbtemperatur und dem Zielwert für die Einstellung der Helligkeit; wobei das Blitzgerät eine entsprechende Anzeigehelligkeit und eine entsprechende Anzeigefarbtemperatur übereinstimmend mit dem aktuellen Verhältnis ausgibt; und
einen manuellen Regler, der konfiguriert ist, um Helligkeits-, Farbtemperatur- und Blitzfrequenzparameter des Blitzgerätsl manuell einzustellen und die Parameter an das Steuergerät weiterzuleiten, wobei das Steuergerät ein entsprechendes aktuelles Verhältnis übereinstimmend mit den Parametern ausgibt;
wobei das Steuerungssystem **dadurch gekennzeichnet ist, dass** der manuelle Regler so konfiguriert ist, dass er die Farbe des Blitzgeräts einstellt;
wobei der 3A Algorithmus Folgendes umfasst: einen automatischen Fokusalgorithmus, einen automatischen Belichtungsalgorithmus und einen automatischen Weisswertalgorithmus, und der automatische Weisswertalgorithmus umfasst:
Erhalt eines Vorbelichtungbildes durch Vorbelichtung des Blitzgeräts nach Erhalt des Originalbildes der aktuellen Szene durch das Kamerasystem (2);
Analyse des Originalbildes und Durchführung von statistischen Operationen an der R/G und B/G-Information im Originalbild zwecks Erhalt der Farbtemperaturinformation des Originalbildes;
Analyse des Vorbelichtungsbildes und Durchführung von statistischen Operationen an der R/G- und BG-Information im Vorbelichtungsbild zwecks Erhalt der Farbtemperaturinformation des Vorbelichtungsbildes; und
Hinzufügen der Farbtemperaturinformation des Originalbildes zu der Farbtemperaturinformation des Vorbelichtungsbildes, um schliesslich den Zielwert für die Einstellung der Farbtemperatur zu erhalten.

2. Das Steuerungssystem für ein Blitzgerät eines Handyterminals gemäss Anspruch 1, bei dem der 3A-Algorithmus ausserdem einen automatischen Fokusalgorithmus und einen automatischen Belichtungsalgorithmus umfasst.

3. Eine Steuerungsmethode für ein Blitzgerät, die Folgendes umfasst:
Einen Szenen-Prädiktor, der eine Umgebungslichtfarbtemperatur und eine Umgebungslichthelligkeit einer aktuellen Szene vorbeurteilt zwecks Erhalt von Daten derselben unter Berechnung eines Fokuspunkts, eines Zielwertes für die Einstellung der Farbtemperatur und eines Zielwertes für die Einstellung der Helligkeit, wobei ein 3A-Algorithmus zur Anwendung kommt, und Übermittlung des Fokuspunktes, des Zielwertes für die Einstellung der Farbtemperatur und des Zielwertes für die Einstellung der Helligkeit an ein Steuergerät;
das Steuergerät berechnet entsprechend eine Verschlusszeit, eine Empfindlichkeit eines Sensors des Kamerasystems (2) und ein aktuelles, vom Blitzgerät ausgegebenenes Verhältnis übereinstimmend mit dem Zielwert für die Einstellung der Farbtemperatur und dem Zielwert für die Einstellung der Helligkeit; und
das Blitzgerät, das eine entsprechende Anzeigefarbtemperatur und eine Anzeigehelligkeit ausgibt;
**dadurch gekennzeichnet, dass** der 3A- Algorithmus Folgendes umfasst Einen automatischen Fokusalgorithmus, einen automatischen Belichtungsalgorithmus und einen automatischen Weisswertalgorithmus, und der automatische Weisswertalgorithmus umfasst:
Erhalt eines Vorbelichtungsbildes durch Vorbelichtung des Blitzgeräts nach Erhalt eines Originalbildes der aktuellen Szene durch das Kamerasystem (2);
Analyse des Originalbildes und Durchführung von statistischen Operationen an R/G und B/G-Information im Originalbild zwecks Erhalt der Farbtemperaturinformarion des Originalbildes;
Analyse des Vorbelichtungsbildes und Duchführung von statistischen Operationen an der R/G und B/G-Information im Vorbelichtungsbild zwecks Erhalt der Farbtemperaturinformation des Vorbelichtungsbildes; und
Hinzufügen der Farbtemperaturinformation des Originalbildes zu der Farbtemperaturinformation des Vorbelichtungsbildes, um schliesslich den Zielwert für die Einstellung der Farbtemperatur zu erhalten.

4. Die Steuerungsmethode eines Blitzgeräts gemäss Anspruch 3, bei der der 3A - Algorithmus ausserdem einen automatischen Fokusalgorithmus und einen automatischen Belichtungsalgorithmus umfasst.

5. Die Steuerungsmethode eines Blitzgeräts gemäss Anspruch 4, bei der der automatische Fokusalgorithmus einen maximalen Fokuswert in der aktuellen Szene sucht, indem er eine Position einer Linse des Kamerasystems (2) einstellt, und ein Objektivmotor bewegt die Linse zu einer Position, die dem maximalen Fokuswert entspricht, wodurch die Fokussierung abgeschlossen und der Fokuspunkt bestimmt wurde.

6. Die Steuerungsmethode eines Blitageräts gemäss Anspruch 4, bei der der automatische Belichtungsalgorithmus Folgendes umfasst:
Erhalt eines Vorbelichtungsbildes durch Vorbelichtung des Blitzgeräts nach Erhalt eines Originalbildes der aktuellen Szene durch das Kamerasystem (2);
Analyse des Originalbildes zwecks Erhalt eines Helligkeitwertes des Originalbildes, und Vergleich des Helligkeitwertes des Originalbildes mit dem Helligkeitszielwert zwecks Erhalt eines Belichtungseinstellungswertes des Originalbildes;
Analyse des Vorbelichtungsbildes zum Erhalt eines Helligkeitswertes des Vorbelichtungsbildes, und Vergleich des Helligkeitswertes des Vorbelichtungbildes mit dem Helligkeitszielwert zum Erhalt eines Belichtungseinstellungswertes des Vorbelichtungbildes; und
Mittelwertbildung des Belichtungseinstellungwertes des Originalbildes und des Belichtungseinstellungswertes des Vorbelichtungsbildes, um schliesslich den Zielwert für die Einstellung der Helligkeit zu erhalten;
wobei der Szenen-Prädiktor den Helligkeitswert des Originalbildes oder des Vorbelichtungsbildes um den entsprechenden Belichtungseinstellungswert reduziert, wenn der Helligkeitswert des Originalbildes oder des Vorbelichtungsbildes höher ist, als der Helligkeitszielwert, um eine Überbelichtung zu definieren; und wobei der Szenen-Prädiktor den Helligkeitswert des Originalbildes oder des Vorbelichtungbildes um den entspsrechenden Belichtungseinstellungswert erhöht, wenn der Helligkeitswert des Originalbildes oder des Vorbelichtungsbildes niedriger ist als der Helligkeitszielwert, um eine Unterbelichtung zu definieren.

7. Die Steuerungsmethode eines Blitzgeräts gemäss Anspruch 3, bei der das Blitzgerät ein OLED-Anzeigegerät ist.

8. Die Steuerungsmethode eines Blitzgeräts gemäss Anspruch 6, bei der der Helligkeitszielwert 47 ist.

9. Die Steuerungsmethode eines Blitzgeräts gemäss Anspruch 3, bei der die statistischen Operationen an der R/G- und B/G-Information im Originalbild oder dem Vorbelichtungsbild Folgendes umfassen:
Umwandlung des Umgebungslichtes in ein elektrisches Signal über den Sensor des Kamerasystems (2); und
Durchführung einer statistischen Operation an einem Wert des elektrischen Signals eines jeden Pixels der Bayer-Gruppe in dem Sensor.

10. Die Steuerungsmethode eines Blitzgeräts gemäss Anspruch 7, bei der die OLED-Anzeigegruppe ein Substrat (4), eine Anode (5), eine Lochtransportschicht (6), eine organische Lichtemittierungsschicht (7), eine Elektrontransportschicht (8) und eine Kathode (9) umfasst; wobei die Anode (5), die Lochtransportschicht (6), die organische Lichtemittierungsschicht (7), die Elektrontransportschicht (8) und die Kathode (9) sequentiell auf dem Substrat (4) vorgesehen sind.

## Revendications

1. Un système de contrôle pour un ensemble flash d'un terminal mobile comprenant:
un ensemble flash agencé sur le terminal mobile, l'ensemble flash étant un module d'affichage (1) situé sur l'extrémité frontale d'un module de caméra (2) du terminal mobile ;
un indicateur de scène, configuré de manière à obtenir une température de couleur de la lumière ambiante et une luminosité de la lumière ambiante d'une scène actuelle au travers du module de caméra (2) ; calculer un point focal, une valeur cible pour l'ajustement de la température de couleur et une valeur cible pour le réglage de la luminosité, en utilisant un algorithme 3A, et transmettre à un contrôleur le point focal, la valeur cible pour le réglage de la température de couleur et la valeur cible pour le réglage de la luminosité;
le contrôleur, configuré de manière à calculer, respectivement, la vitesse d'obturation, la sensibilité du capteur du module de camera (2) et le ratio actuel émis par l'ensemble flash conformément à la valeur cible pour le réglage de la température de couleur et à la valeur cible pour le réglage de la luminosité ; l'ensemble flash émettant la luminosité d'affichage et la température de couleur d'affichage respectives conformément au ratio actuel; et
un régulateur manuel, configuré de manière à ajuster les paramètres de luminosité, la température de couleur et la fréquence flash de l'ensemble flash, manuellement, et transmettre les paramètres au contrôleur ; le contrôleur émettant un ratio actuel correspondant aux paramètres ;
il est **caractérisé en ce que** le régulateur manuel est en outre configuré pour ajuster la couleur de l'ensemble flash;
l'algorithme 3A comprend: un algorithme de focalisation automatique, un algorithme d'exposition automatique et un algorithme d'équilibre automatique des blancs; et l'algorithme d'équilibre automatique des blancs comprend:
obtenir une image pré-flash en effectuant un pré-flash de l'ensemble flash après avoir obtenu une image originale de la scène actuelle à travers le module de caméra (2);
analyser l'image originale et exécuter des opérations statistiques avec l'information R/G et B/G sur l'image originale pour obtenir l'information de température de couleur de l'image originale;
analyser l'image pré-flash et exécuter des opérations statistiques avec l'information R/G et B/G sur l'image pré-flash pour obtenir l'information de température de couleur de l'image pré-flash; et
ajouter l'information de température de couleur de l'image originale à l'information de température de couleur de l'image pré-flash pour obtenir finalement la valeur cible du réglage de la température de couleur.

2. Le système de contrôle pour un ensemble flash d'un terminal mobile conformément à la revendication 1, où l'algorithme 3A comprend en outre un algorithme de focalisation automatique et un algorithme d'exposition automatique.

3. Une méthode de contrôle d'un ensemble flash, comprenant:
un indicateur de scène qui prédit la température de couleur de la lumière ambiante et la luminosité de la lumière ambiante d'une scène actuelle pour obtenir l'information de celles-ci, en calculant un point de focalisation, une valeur cible du réglage de la température de couleur et une valeur cible du réglage de la luminosité, en utilisant un algorithme 3A, et transmettre à un contrôleur le point de focalisation, la valeur cible du réglage de la température de couleur et la valeur cible du réglage de la luminosité;
le contrôleur qui calcule, respectivement, la vitesse d'obturation, la sensibilité du capteur du module de camera (2) et le ratio actuel émis par l'ensemble flash, conformément à la valeur cible pour le réglage de la température de couleur et à la valeur cible pour le réglage de la luminosité; et
l'ensemble flash qui émet, respectivement, la température de couleur d'affichage et la luminosité d'affichage;
qui se **caractérise en ce que** l'algorithme 3A comprend : un algorithme de focalisation automatique, un algorithme d'exposition automatique et un algorithme d'équilibre automatique des blancs ; et l'algorithme d'équilibre automatique des blancs comprend les pas suivants :
obtenir une image pré-flash en effectuant un pré-flash de l'ensemble flash après avoir obtenu une image originale de la scène actuelle à travers le module de caméra (2);
analyser l'image originale et exécuter des opérations statistiques avec l'information R/G et B/G sur l'image originale pour obtenir l'information de température de couleur de l'image originale;
analyser l'image pré-flash et exécuter des opérations statistiques avec l'information R/G et B/G sur l'image pré-flash pour obtenir l'information de température de couleur de l'image pré-flash; et
ajouter l'information de température de couleur de l'image originale à l'information de température de couleur de l'image pré-flash pour obtenir finalement la valeur cible du réglage de la température de couleur.

4. La méthode de contrôle d'un ensemble flash conformément à la revendication 3, où l'algorithme 3A comprend en outre un algorithme de focalisation automatique et un algorithme d'exposition automatique.

5. La méthode de contrôle d'un ensemble flash conformément à la revendication 4, où l'algorithme de focalisation automatique cherche la valeur maximale de focalisation de la scène actuelle en ajustant la position du téléobjectif du module de caméra (2); et un moteur du téléobjectif situe celui-ci dans la position correspondant à la valeur de focalisation maximale, pouvant ainsi compléter la focalisation et déterminer le point de focalisation.

6. La méthode de contrôle d'un ensemble flash conformément à la revendication 4, où l'algorithme d'exposition automatique comprend:
obtenir une image pré-flash en effectuant un pré-flash de l'ensemble flash après avoir obtenu une image originale de la scène actuelle à travers le module de caméra (2) ;
analyser l'image originale pour obtenir une valeur de luminosité de l'image originale et comparer la valeur de luminosité de l'image originale à la valeur cible de luminosité pour obtenir la valeur de définition d'exposition de l'image originale;
analyser l'image pré-flash pour obtenir une valeur de luminosité de l'image pré-flash et comparer la valeur de luminosité de l'image pré-flash à la valeur cible de luminosité pour obtenir la valeur de définition d'exposition de l'image flash; et
équilibrer la valeur de définition de l'exposition de l'image originale avec la valeur de définition de l'exposition de l'image flash pour obtenir finalement la valeur cible de l'ajustement de la luminosité;
où l'indicateur de scène diminue la valeur de luminosité de l'image originale ou de l'image pré-flash selon la valeur de définition de l'exposition correspondante lorsque la valeur de luminosité de l'image originale ou de l'image flash est plus élevée que la valeur cible de luminosité pour définir une surexposition; et l'indicateur de scène augmente la valeur de luminosité de l'image originale ou de l'image pré-flash selon la valeur de définition d'exposition correspondante lorsque la valeur de luminosité de l'image originale ou de l'image pré-flash est plus faible que la valeur cible de luminosité pour définir une sous-exposition.

7. La méthode de contrôle d'un ensemble flash conformément à la revendication 3, où l'ensemble flash est un module d'affichage OLED.

8. La méthode de contrôle d'un ensemble flash conformément à la revendication 6, où la valeur cible de luminosité est 47.

9. La méthode de contrôle d'un ensemble flash conformément à la revendication 3, où les opérations statistiques avec l'information R/G et B/G sur l'image originale ou l'image flash comprennent:
transformer la lumière ambiante en un signal électrique au travers du capteur du module de caméra (2) ; et
effectuer une opération statistique sur une valeur du signal électrique de chaque pixel de la matrice de Bayer dans le capteur.

10. La méthode de contrôle d'un ensemble flash conformément à la revendication 7, où le module d'affichage OLED comprend un substrat (4), une anode (5), une couche de transport de trous (6), une couche d'émission de lumière organique (7), une couche de transport d'électrons (8) et une cathode (9); l'anode (5), la couche de transport de trous (6), la couche d'émission de lumière organique (7), la couche de transport d'électrons (8) et la cathode (9) sont fournies de manière séquentielle sur le substrat (4).
